# EUROPEAN PATENT SPECIFICATION

(11) **EP 4 385 656 B1**
(45) Date of publication and mention of the grant of the patent: **12.11.2025**
(21) Application number: 22860830.3
(22) Date of filing: 08.03.2022
(51) Int. Cl.: B23Q 11/10, B23B 29/24, B23B 29/20, B23B 29/32

(54) **TOOL HOLDER AND TURRET**
WERKZEUGHALTER UND REVOLVER
PORTE-OUTIL ET TOURELLE

(30) Priority: 26.08.2021 JP 2021137917
(43) Date of publication of application: 19.06.2024
(73) Proprietor: NT Tool Corporation, Takahama City Aichi 444-1386 (JP)
(72) Inventor: ISHIKAWA, Hitoshi, Takahama-City, Aichi 4441386 (JP); SUZUKI, Hiroyuki, Kariya-shi, Aichi 448-8688 (JP)
(74) Representative: Kramer Barske Schmidtchen Patentanwälte PartG mbB
(86) International application number: PCT/JP2022/010078
(87) International publication number: WO 2023/026532

(56) References cited:
- EP-A2- 0 669 187
- WO-A1-2017/013738
- JP-A- H0 482 606
- JP-A- H01 222 842
- JP-U- S59 171 050
- JP-U- S6 185 339

## Description

### TECHNICAL FIELD

The present disclosure relates to a tool holder that holds a tool and to a turret to which a plurality of tool holders are detachably attachable.

### BACKGROUND ART

In machine tools that perform cutting processing and the like on metal workpieces, tool holders are used, which hold tools that process the workpieces.

Rotary tool holders (sometimes called "milling tool holders") or non-rotating tool holders (sometimes called "turning tool holders") are used as the tool holders. Rotary tool holders hold tools (sometimes called "milling tools" or "rotary tools"), which process a fixed workpiece, in a rotatable manner. Non-rotating tool holders hold tools (sometimes called "turning tools" or "non-rotating tools"), which process rotating workpieces, in a non-rotatable manner.

Here, in order to be able to perform multiple processing operations continuously, a machine tool equipped with a turret is used. The turret is configured to be rotatable around a turret centerline. Furthermore, a plurality of tool holder attachment surfaces are provided, in the circumferential direction, on the outer peripheral sides of the turret, to which attaching surfaces of tool holders holding tools are attachable. Then, the turret is rotated by a turret drive mechanism so that a tool holder holding a tool used for processing (a tool holder attachment surface to which an attaching surface of a tool holder is attached) is disposed in a processing position. A rotary tool holder and a non-rotating tool holder can be attached to the tool holder attachment surfaces. Such a turret is disclosed, for example, in Patent Document 1 (Japanese Unexamined Patent Application Publication No. 2006-167862 A).

When processing a workpiece using a tool, it is necessary to supply a cooling medium such as an oil (called a "coolant") to the cutting edge of the tool for lubrication between the workpiece and the tool, for cooling the workpiece or the tool, for removing chips (sometimes called "swarf") generated by the processing, and the like.

For this purpose, a tool holder is used, which is provided with a cooling medium supply mechanism that conducts cooling medium supplied from the machine tool, which is sprayed onto the cutting edge of the tool or the like.

Furthermore, tool holders have been proposed that are provided with a cooling medium supply mechanism having a pump, in order to increase the pressure of the cooling medium. Such a tool holder is disclosed, for example, in Patent Document 2 (Japanese Unexamined Patent Application Publication No. S62-4550 A).

JP H01 222842 A discloses a tool holder according to the preamble of claim 1.

### BRIEF SUMMARY

### Problems to Be Solved

At the pressure of the cooling medium supplied from ordinary machine tools, sufficient cooling effects and lubricating effects may not be obtained by the cooling medium that is sprayed from the cooling medium supply mechanism provided in the tool holder. Furthermore, it may not be possible to sufficiently remove chips generated during the processing. In such a case, after processing the workpiece an operator needs to perform the operation of removing chips remaining on the workpiece (removal operation).

Here, it would be conceivable to enhance the chip removal effect by increasing the pressure of the cooling medium sprayed from the cooling medium supply mechanism that is provided in the tool holder.

In order to increase the pressure of the cooling medium sprayed from the cooling medium supply mechanism that is provided in the tool holder, it is necessary to increase the pressure of the cooling medium supplied from the machine tool.

However, in order to increase the pressure of the cooling medium supplied from the machine tool, it is necessary to design the machine tool to high pressure specifications, which is very expensive.

Furthermore, it would be conceivable to use a tool holder provided with a cooling medium supply mechanism constituted by a pump having a rotary part that is rotationally driven by a drive mechanism provided in the machine tool, as disclosed in Patent Document 2. In this case, the pressure of the cooling medium sprayed from the cooling medium supply mechanism can be increased by increasing the rotational speed of the rotary part of the pump.

However, the tool holder disclosed in Patent Document 2 sprays cooling medium onto the cutting edge of the tool or the like while rotating the tool that it holds so as to process the workpiece. There is, therefore, a limit on increasing the rotational speed of the tool holder.

Furthermore, since non-rotating tool holders that hold tools in a non-rotatable manner do not have a rotary part, the pressure of the cooling medium cannot be increased by using the pump disclosed in Patent Document 2.

In particular, when using a non-rotating tool holder that holds a tool in a non-rotatable manner, long continuous chips tend to be generated when processing. If such long continuous chips wrap around the tool or the workpiece, the tool or the workpiece may be damaged.

Therefore, there is a demand for the development of techniques for non-rotating tool holders that hold tools in a non-rotatable manner, which can prevent long continuous chips from wrapping around the tool or the workpiece.

Accordingly, an object of the present disclosure is to provide techniques for tool holders that hold tools in a non-rotatable manner (non-rotating tool holders) with which, by way of a configuration such that high-pressure cooling medium can be sprayed in a focused manner toward a predetermined location, chips generated when processing can be fragmented, and thus long continuous chips can be prevented from wrapping around the tool or the workpiece.

The above object is solved by a tool holder according to claim 1, which defines the invention.

A first disclosure relates to a tool holder that holds a tool, which processes a rotating workpiece, in a non-rotatable manner (non-rotating tool holder).

The tool holder of the present disclosure includes a body part, a rotary member, a pump, and a nozzle.

The body part has an attaching part that can be detachably attached to a tool holder attachment part of a machine tool. For example, a tool holder attachment surface provided at the outer periphery of a turret on the machine tool is used as the tool holder attachment part.

Furthermore, the body part has a body part inner peripheral surface, a body part interior space formed by the body part inner peripheral surface, a first body part passage, and a second body part passage.

The rotary member is rotatably disposed within the body part interior space. Various methods can be used as the method that disposes the rotary member in a rotatable manner within the body part interior space.

The pump has a rotary part, an inlet part, and an outlet part. The rotary part of the pump is disposed in the body part interior space so as to be rotatable in conjunction with the rotation of the rotary member. The inlet part communicates with the first body part passage of the body part and the outlet part communicates with the second body part passage of the body part. Furthermore, the pump is configured so as to increase the pressure of the cooling medium suctioned from the inlet part to a pressure corresponding to the rotational speed of the rotary part, and to discharge the cooling medium, the pressure of which has been increased, from the outlet part.

A variety of configurations of known pumps, which have rotary parts, can be used as the pump. Various methods can be used as the method that rotates the rotary part of the pump in conjunction with the rotation of the rotary member.

The nozzle has a spray hole that sprays the cooling medium. Furthermore, the nozzle is attached to the body part so that the spray hole communicates with the second body part passage of the body part.

Furthermore, the tool holder is configured so that, in a state in which the attaching part has been attached to the tool holder attachment part, cooling medium supplied from the machine tool is conducted through the first body part passage. In addition, the rotary member is configured so as to be rotationally driven by a drive mechanism provided in the machine tool.

The rotational speed of the rotary part (rotary member) of the pump is set so that the pressure of the cooling medium sprayed from the spray hole will be a predetermined pressure that can fragment chips generated by processing the workpiece.

With the tool holder of the first disclosure, a high-pressure cooling medium can be sprayed in a focused manner toward a predetermined location with a tool holder that holds a tool in a non-rotatable manner (non-rotating tool holder). It is thereby possible to fragment chips generated when processing a workpiece, and it is possible to prevent long continuous chips from wrapping around the tool or the workpiece.

In a different mode of the first disclosure, the body part is constituted by a body member, a sleeve, and a cap.

The body member is formed in a cylindrical shape, and includes an attaching part, a body member inner peripheral surface, a body member interior space formed by the body member inner peripheral surface, a first body member passage and a second body member passage, which open at the body member inner peripheral surface.

The sleeve is formed in a cylindrical shape and includes a sleeve inner peripheral surface, a sleeve outer peripheral surface, a sleeve interior space formed by the sleeve inner peripheral surface, a first sleeve passage and a second sleeve passage, which open at the sleeve outer peripheral surface and at the sleeve inner peripheral surface.

The sleeve is disposed within the body member interior space so that the first sleeve passage communicates with the first body member passage and the second sleeve passage communicates with the second body member passage.

The cap is provided on the sleeve so as to close the front end side of the sleeve interior space.

The rotary member is rotatably disposed within the body member interior space.

The pump is configured so that the rotary part is disposed between the rotary member and the cap, the inlet part communicates with the first sleeve passage, and the outlet part communicates with the second sleeve passage.

The nozzle is attached to the body member so that the spray hole communicates with the second body member passage.

Furthermore, it is configured such that, in the state in which the attaching part has been attached to the tool holder attachment part, cooling medium supplied from the machine tool is conducted through the first body member passage.

With this mode, the tool holder can be configured easily.

A second disclosure relates to a turret.

The turret is provided on a machine tool and is rotatable around a turret centerline. The turret is provided with a plurality of tool holder attachment parts in the circumferential direction on the outer peripheral side, to which attaching parts of tool holders are detachably attachable.

Furthermore, a turret drive mechanism is provided. The turret drive mechanism rotates the turret around the turret centerline so that one of the plurality of tool holder attachment parts (a tool holder attached to a tool holder attachment part) is disposed at a predetermined processing position.

Furthermore, a cooling medium supply mechanism is equipped, which is provided in the machine tool. The cooling medium supply mechanism is configured such that the cooling medium is suppliable to a tool holder attached to a tool holder attachment part which is disposed at a processing position.

Furthermore, a drive mechanism is equipped, which is provided in the machine tool. The drive mechanism is configured to rotatably drive the rotary part of the tool holder attached to the tool holder attachment part disposed at the processing position.

Furthermore, a tool holder that has a pump and that holds a tool in a non-rotatable manner (non-rotating tool holder), which is described above, is attached to at least one of the plurality of tool holder attachment parts.

The drive mechanism rotationally drives the rotary member when, for example, a tool holder that has a pump and that holds a tool in a non-rotatable manner (non-rotating tool holder) is attached to a tool holder attachment part. Furthermore, the drive mechanism rotationally drives a rotary shaft that rotates a tool when a tool holder that holds the tool (rotary tool holder) in a rotatable manner is attached to a tool holder attachment part.

The turret of the second disclosure has the same effect as the tool holder of the first disclosure, when using a tool holder that holds a tool in a non-rotatable manner (non-rotating holder) attached to the tool holder attachment part.

### Effects

By using the tool holder of the first disclosure and the turret of the second disclosure, when processing a workpiece using a tool that is held in the tool holder in a non-rotatable manner, a high-pressure cooling medium can be sprayed in a focused manner toward a predetermined location. Chips generated when processing can thereby be fragmented, preventing long continuous chips from wrapping around the tool or the workpiece.

### BRIEF DESCRIPTION OF THE DRAWINGS

FIG. 1 is a drawing showing one mode of embodiment of a turret of the present disclosure.
FIG. 2 is a cross-sectional view of one mode of embodiment of a tool holder of the present disclosure.
FIG. 3 is an enlarged view, in which a key portion of FIG. 2 has been enlarged.

### MODES FOR CARRYING OUT THE TEACHINGS

The following detailed description merely teaches those skilled in the art detailed information for practicing preferred embodiments of the present disclosure. The technical scope of the present invention is defined by the scope of the appended claims.

Modes of embodiment of the tool holder of the present disclosure will be described below with reference to the drawings.

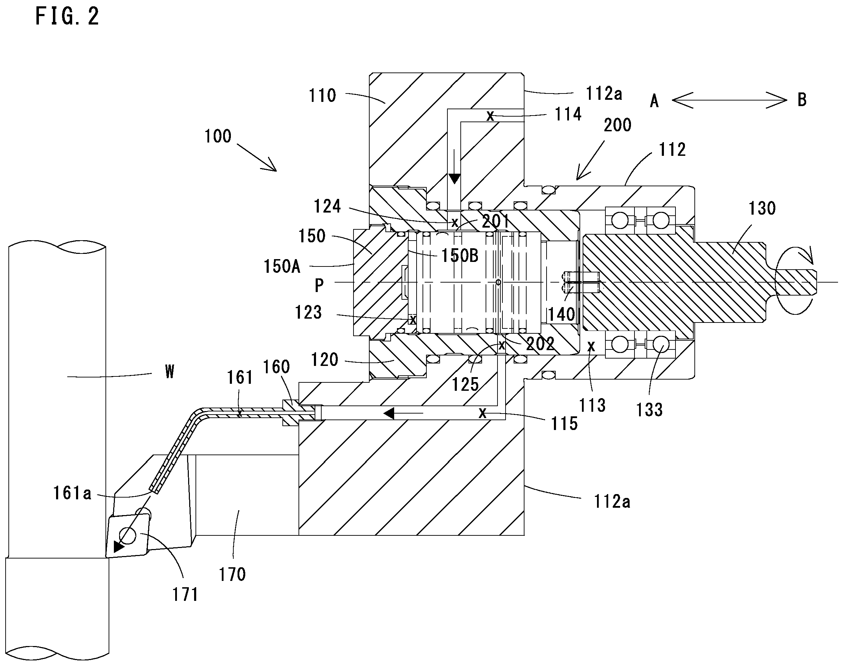

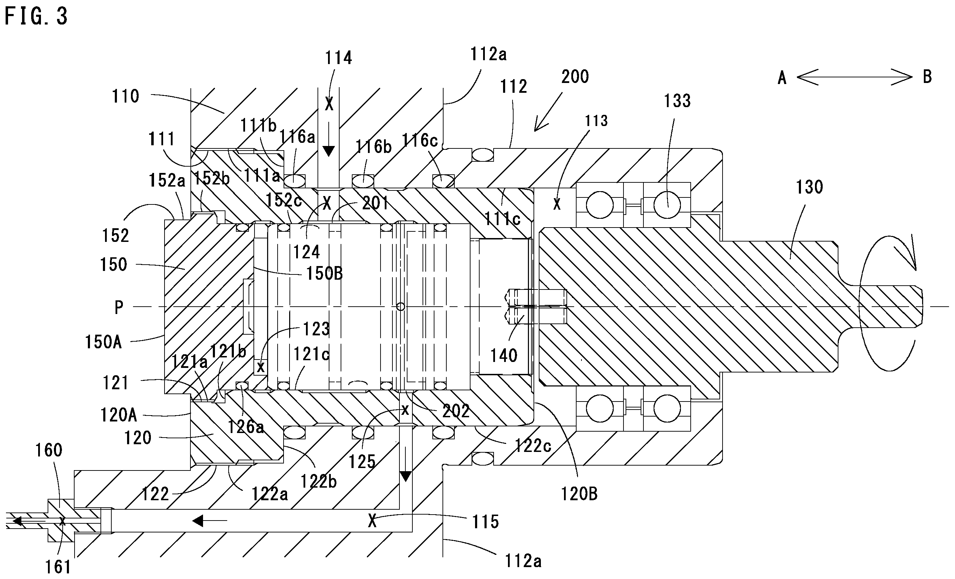

Note that, hereinafter, the direction along the centerline P of the tool holder 100 (the rotation centerline of the rotary member 130 and the rotary part of the pump 200) will be referred to as the "axial direction". Furthermore, in the axial direction, the side opposite to the side where the rotary member 130 is disposed (the arrow A side (left side) in FIG. 2 and FIG. 3) is referred to as the "front end side" or " one side in the axial direction". Furthermore, in the axial direction, the side where the rotary member 130 is disposed (the arrow B side (right side) in FIG. 2 and FIG. 3) is referred to as the "rear end side" or "the other side in the axial direction".

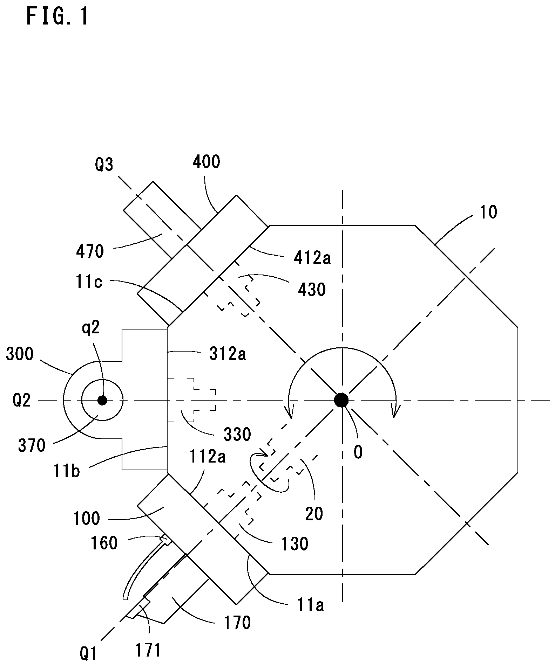

First, one mode of embodiment of the turret 10 of the present disclosure will be described with reference to FIG. 1.

The turret 10 is provided on a machine tool and is rotatable around the turret centerline O.

A plurality of tool holder attachment surfaces 11a to 11c are provided in the circumferential direction on the outer peripheral side of the turret. In this mode of embodiment, the tool holder attachment surfaces 11a to 11c are provided at equal intervals. Note that, in FIG. 1, in order to facilitate description, only the tool holder attachment surfaces 11a to 11c are labeled with reference numerals.

The attaching surfaces of the tool holders can be detachably attached to the tool holder attachment surfaces 11a to 11c. In this mode of embodiment, the tool holder attachment surfaces 11a to 11c extend in directions that intersect (preferably perpendicularly intersect) with directions of extension of attachment surface centerlines Q1 to Q3, which extend at equal intervals around the turret centerline O.

In FIG. 1, an attaching surface 112a of the tool holder 100 is detachably attached to the tool holder attachment surface 11a. The tool holder 100 holds a tool 170 having a cutting edge 171 in a non-rotatable manner. Hereinafter, the tool holder 100 will be referred to as a "non-rotating tool holder 100" and the tool 170 will be referred to as a "non-rotating tool 170". Note that a tool that is held in a non-rotatable manner is sometimes called a "turning tool."

An attaching surface 312a of a tool holder 300 is attached to the tool holder attachment surface 11b. The tool holder 300 holds a tool 370 so as to be rotatable around a tool rotation centerline q2 that intersects (preferably perpendicularly intersects) with the direction of extension of the attachment surface centerline Q2. Hereinafter, the tool holder 300 will be referred to as a "rotary tool holder 300" and the tool 370 will be referred to as a "rotary tool 370". Note that a tool held in a rotatable manner is sometimes called a "milling tool".

An attaching surface 412a of a tool holder 400 is attached to the tool holder attachment surface 11c. The tool holder 400 holds a tool 470 so as to be rotatable around the attachment surface centerline Q3. Hereinafter, the tool holder 400 will be referred to as a "rotary tool holder 400" and the tool 470 will be referred to as a "rotary tool 470".

The turret 10 is rotationally driven around the turret centerline O by a turret drive mechanism (not illustrated) so that any one of the tool holder attachment surfaces 11a to 11c (the tool holders 100, 300, and 400 attached to the tool holder attachment surfaces 11a to 11c) is disposed in a predetermined processing position.

In this mode of embodiment, the tool holder 100 corresponds to a "tool holder that holds a tool in a non-rotatable manner" of the present teachings.

Furthermore, the tool holder attachment surfaces 11a to 11c correspond to a "tool holder attachment part" of the present teachings. Furthermore, the attaching surfaces 112a, 312a, and 412a correspond to an "attaching part" of the present teachings.

Furthermore, a drive mechanism 20 is provided that rotationally drives a rotary part of a tool holder attached to a tool holder attachment surface disposed at a processing position. For example, a drive mechanism constituted by a drive means such as a motor is used as the drive mechanism 20.

In the example shown in FIG. 1, a rotary part of the non-rotating tool holder 100, having a pump, of the present disclosure, which is attached to the tool holder attachment surface 11a disposed at the processing position, is a rotary member 130 (described hereafter). Note that conventional non-rotating tool holders do not have a rotary part because they hold a non-rotating tool in a non-rotatable manner and do not have a pump that pressurizes a cooling medium.

Furthermore, a rotary part of the rotary tool holder 300 attached to the tool holder attachment surface 11b is a rotary shaft 330. The rotary tool 370 is configured to rotate due to rotation of the rotary shaft 330.

Further, a rotary part of the rotary tool holder 400 attached to the tool holder attachment surface 11c is a rotary shaft 430. The rotary tool 470 is configured to rotate due to rotation of the rotary shaft 430.

Furthermore, a cooling medium supply mechanism (not illustrated) is provided, which supplies a cooling medium to a tool holder attached to a tool holder attachment surface disposed at a processing position.

In the non-rotating tool holder 100 shown in FIG. 1, the cooling medium supplied from the cooling medium supply mechanism is pressurized by the pump 200 (described hereafter) and then sprayed from the spray hole 161 of the non-rotating nozzle 160.

In the rotary tool holders 300 and 400, the cooling medium supplied from the cooling medium supply mechanism is sprayed directly from spray holes that rotate together with the tool.

Note that the rotary tool holders 300 and 400 can also be configured so that the cooling medium supplied from the cooling medium supply mechanism is pressurized by a pump, and then sprayed from spray holes that rotate together with the tool, as disclosed in Patent Document 2.

Next, one mode of embodiment of the non-rotating tool holder 100 will be described with reference to FIG. 2 and FIG. 3.

FIG. 2 is a cross-sectional view of one mode of embodiment of a non-rotating tool holder 100. Furthermore, FIG. 3 is an enlarged view, in which a key portion of FIG. 2 has been enlarged.

The non-rotating tool holder 100 in this mode of embodiment includes a body part, a rotary member 130, a pump 200, and a nozzle 160.

The non-rotating tool holder 100 includes a tool holding mechanism (not illustrated) that holds the non-rotating tool 170 in a non-rotatable manner. A variety of configurations of known tool holding mechanisms can be used as the tool holding mechanism that holds the non-rotating tool 170.

The body part is constituted by a body member 110, a sleeve 120, and a cap 150.

The body member 110 is formed in a cylindrical shape and has a body member inner peripheral surface 111 and a body member outer peripheral surface 112. A body member interior space 113 is formed by the body member inner peripheral surface 111.

In this mode of embodiment, the body member inner peripheral surface 111 has body member inner peripheral surface portions 111a to 111c. The body member inner peripheral surface portions 111a and 111c have a circular cross section and extend in the axial direction. The body member inner peripheral surface portion 111c is disposed further to the rear end side than the body member inner peripheral surface portion 111a and has an inner diameter smaller than the inner diameter of the body member inner peripheral surface portion 111a. The body member inner peripheral surface portion 111b extends in the radial direction and forms a step surface connecting the body member inner peripheral surface portions 111a and 111c. A female thread is formed on the body member inner peripheral surface portion 111a.

The body member outer peripheral surface 112 has a body member outer peripheral surface portion 112a. The body member outer peripheral surface portion 112a extends in the radial direction. The body member outer peripheral surface portion 112a is configured to be detachably attachable to the tool holder attachment surfaces 11a to 11c of the turret 10.

The body member outer peripheral surface portion 112a corresponds to a "body part outer peripheral surface portion" or an "attaching part" of the present teachings.

Furthermore, a first body member passage 114 and a second body member passage 115 are formed in the body member 110.

The first body member passage 114 opens at the body member outer peripheral surface portion 112a and the body member inner peripheral surface (body member inner peripheral surface portion 111c). Furthermore, the second body member passage 115 opens at the body member inner peripheral surface (body member inner peripheral surface portion 111c).

Furthermore, it is configured such that, in the state in which the body member outer peripheral surface portion 112a has been attached to a tool holder attachment surface 11a to 11c, the cooling medium supplied from the machine tool is conducted through the first body member passage 114.

Note that the nozzle 160 can be attached to the body member 110 so that a spray hole 161 of the nozzle 160 communicates with the second body member passage 115.

The sleeve 120 is formed in a cylindrical shape and has a sleeve inner peripheral surface 121, a sleeve outer peripheral surface 122, a sleeve front end surface 120A, and a sleeve rear end surface 120B. A sleeve interior space 123 is formed by the sleeve inner peripheral surface 121.

In this mode of embodiment, the sleeve inner peripheral surface 121 has sleeve inner peripheral surface portions 121a to 121c. The sleeve inner peripheral surface portions 121a and 121c have a circular cross section and extend in the axial direction. The sleeve inner peripheral surface portion 121c is disposed further to the rear end side than the sleeve inner peripheral surface portion 121a, and has an inner diameter smaller than the inner diameter of the sleeve inner peripheral surface portion 121a. The sleeve inner peripheral surface portion 121b extends in the radial direction and forms a step surface connecting the sleeve inner peripheral surface portions 121a and 121c. A female thread is formed in the sleeve inner peripheral surface portion 121a.

The sleeve outer peripheral surface 122 has sleeve outer peripheral surface portions 122a to 122c. The sleeve outer peripheral surface portions 122a and 122c have a circular cross section and extend in the axial direction. The sleeve outer peripheral surface portion 122c is disposed further to the rear end side than the sleeve outer peripheral surface portion 122a, and has an outer diameter smaller than the outer diameter of the sleeve outer peripheral surface portion 122a. The sleeve outer peripheral surface portion 122b extends in the radial direction and forms a step surface connecting the sleeve outer peripheral surface portions 122a and 122c. A male thread is formed on the sleeve outer peripheral surface portion 122a, which can be screw fastened with the female thread formed on the body member inner peripheral surface portion 111a.

The sleeve 120 is fixed to the body member 110 in the state in which it has been inserted into the body member interior space 113. In this mode of embodiment, the sleeve 120 is fixed to the body member 110 by inserting the sleeve 120 to a position at which the sleeve outer peripheral surface portion 122b abuts the body member inner peripheral surface portion 111b, in the state in which the male thread formed on the sleeve outer peripheral surface portion 122a has been screw fastened with the female thread formed on the body member inner peripheral surface portion 111a.

The method for fixing the sleeve 120 to the body member 110 is not limited to this, and a variety of known methods can be used.

In this mode of embodiment, a space, in which a rotary member 130 (described hereafter) is disposed, is formed within the body member interior space 113, further to the rear end side than the sleeve rear end surface 120B.

Note that sealing members 116a to 116c such as O-rings are disposed between the body member 110 and the sleeve 120.

Furthermore, the sleeve 120 has a first sleeve passage 124 and a second sleeve passage 125.

It is configured such that, in the state in which the sleeve 120 is fixed to the body member 110, the first sleeve passage 124 communicates with the first body member passage 114 and an inlet part 201 of the pump 200.

It is configured such that, in the state in which the sleeve 120 is fixed to the body member 110, the second sleeve passage 125 communicates with the second body member passage 115 and an outlet part 202 of the pump 200.

Note that, in this mode of embodiment, the inlet part 201 and the outlet part 202 of the pump 200 (the first sleeve passage 124 communicating with the inlet part 201 and the second sleeve passage 125 communicating with the outlet part 202) are disposed at positions that are spaced apart in the axial direction.

The cap 150 has a cap outer peripheral surface 152, a cap front end surface 150A, and a cap rear end surface 150B.

The cap outer peripheral surface 152 has cap outer peripheral surface portions 152a to 152c. The cap outer peripheral surface portions 152a to 152c have a circular cross section and extend in the axial direction. The cap outer peripheral surface portion 152c is disposed further to the rear end side than the cap outer peripheral surface portion 152a. The cap outer peripheral surface portion 152b is disposed between the cap outer peripheral surface portions 152a and 152c, and has an outer diameter larger than the outer diameter of cap outer peripheral surface portions 152a and 152c. A male thread that is screw fastenable with the female thread formed on the sleeve inner peripheral surface portion 121a is formed on the cap outer peripheral surface portion 152b.

The cap 150 is fixed on the front end side of the sleeve 120. In this mode of embodiment, the cap 150 is fixed to the sleeve 120 by screw fastening the male thread formed on the cap outer peripheral surface portion 152b with the female thread formed on the sleeve inner peripheral surface portion 121a.

Note that a sealing member 126a such as an O-ring is disposed between the sleeve 120 and the cap 150.

The method for fixing the cap 150 to the sleeve 120 is not limited to this, and a variety of known methods can be used.

The rotary member 130 is rotatably disposed within the body member interior space 113. In this mode of embodiment, the rotary member 130 is rotatably disposed in the rear end part of the body member interior space 113 (further to the rear end side than the sleeve rear end surface 120B) with a bearing 133 therebetween. The rotary member 130 is thereby rotatable relative to the body member 110.

Note that it is configured such that, in the state in which the body member outer peripheral surface portion 112a of the tool holder 100 has been attached to the tool holder attachment surface 11a, the rotary member 130 is rotationally driven by the drive mechanism 20 provided in the machine tool. Specifically, in the state in which the tool holder attachment surface 11a has been disposed at the processing position, the rotary member 130 of the tool holder 100, which is attached to the tool holder attachment surface 11a, is rotationally driven by the drive mechanism 20.

The pump 200 is disposed between the cap 150 and the rotary member 130.

The pump 200 has a rotary part rotatably disposed in the sleeve interior space 123. A variety of known pumps, which have rotary parts, can be used as the pump 200. In this mode of embodiment, an internal gear pump is used.

One end side of the rotary part of the pump 200 is connected to the rotary member 130. In this mode of embodiment, the rear end part of the rotary part of the pump 200 is connected to the rotary member 130 via knock pins 140. Furthermore, the other end side of the rotary part of the pump 200 is rotatably supported in the cap 150. In this mode of embodiment, the front end part of the rotary part of the pump 200 is rotatably supported within a recessed part formed in the cap rear end surface 150B of the cap 150.

The rotary part of the pump 200 is thereby rotatable in conjunction with the rotation of the rotary member 130.

Furthermore, the pump 200 has the inlet part 201 and the outlet part 202. The inlet part 201 communicates with the first body member passage 114 via the first sleeve passage 124. Furthermore, the outlet part 202 communicates with the second body member passage 115 via the second sleeve passage 125.

The pump 200 increases the pressure of the cooling medium suctioned from the inlet part 201 to a pressure corresponding to the rotational speed of the rotary part, and discharges the cooling medium, pressure of which has been increased, from the outlet part 202.

In this mode of embodiment, a "body part" of the present teachings is constituted by the body member 110, the sleeve 120, and the cap 150.

Furthermore, the body member outer peripheral surface 112 constitutes a "body part outer peripheral surface" of the present teachings. Furthermore, the body member inner peripheral surface 111 and the sleeve inner peripheral surface 121 constitute a "body part inner peripheral surface" of the present teachings. Furthermore, the body member interior space 113 and the sleeve interior space 123 constitute a "body part interior space" of the present teachings.

Furthermore, the first body member passage 114 and the first sleeve passage 124 constitute a "first body part passage" of the present teachings. Furthermore, the second body member passage 115 and the second sleeve passage 125 constitute a "second body part passage" of the present teachings.

Furthermore, a "pump" of the present teachings is constituted by the sleeve 120, the rotary part, the inlet part 201, and the outlet part 202.

The nozzle 160 has a spray hole 161 that is open at both ends. The nozzle 160 can be attached to the body member 110 so that an opening on one side of spray hole 161 communicates with the second body member passage 115. In this mode of embodiment, the nozzle 160 is attached to the body member 110 by screw fastening a male thread formed on the outer periphery of the rear end side of the nozzle 160 and a female thread formed on the inner peripheral surface of the second body member passage 115.

The cooling medium sprayed from the opening 161a of the spray hole 161 of the nozzle 160 is thereby not affected by rotation of the opening 161a of the spray hole 161. That is to say, the cooling medium can be sprayed in a focused manner toward a predetermined location.

The shape of the nozzle 160 is set so that the cooling medium sprayed from the opening 161a on the other side of the spray hole 161 (the opening on the opposite side to the opening communicating with the second body member passage 115) is sprayed onto the processed part of the workpiece W.

Note that the rotational speed of the rotary part of the pump 200 (rotary member 130) is set to a predetermined rotational speed at which the pressure of the cooling medium sprayed from the opening 161a of the spray hole 161 in the nozzle 160 reaches a pressure that can fragment chips generated when processing.

By fragmenting the chips generated when processing, it is possible to prevent long continuous chips from wrapping around the tool or the workpiece W.

One example of an operation when processing a workpiece W using the non-rotating tool 170 will be described below.

The workpiece W is attached to the machine tool.

From among the tool holders, a non-rotating tool holder 100 holding a non-rotating tool 170 that is required for processing is attached to the tool holder attachment surface 11a of the turret 10.

The turret 10 is rotated so that the tool holder attachment surface 11a is disposed at a processing position.

By controlling the rotational speed and position of the workpiece W, the workpiece W is processed using the non-rotating tool 170 that is held in the non-rotating tool holder 100.

At this time, the rotary member 130 that is connected to the rotary part of the pump 200 is set to a predetermined rotational speed. Cooling medium having a pressure capable of fragmenting chips generated by processing is thereby sprayed from the opening 161a of the spray hole 161 in the nozzle 160 onto the processed part of the workpiece W (portion processed by the cutting edge 171 of the non-rotating tool 170).

As described above, by using the non-rotating tool holder 100 of this mode of embodiment, when processing the workpiece W with the non-rotating tool 170, high-pressure cooling medium can be sprayed onto the processed part in a focused manner from the opening 161a of the spray hole 161 in the nozzle 160. Long continuous chips can thereby be prevented from wrapping around the non-rotating tool 170 and the workpiece W, and damage to the non-rotating tool 170 and the workpiece W can be prevented.

Furthermore, because the drive mechanism that rotationally drives the rotary shaft of the rotary tool holder is used as the drive source that rotates the rotary part of the pump, there is no need to provide a separate drive source.

The present disclosure is not limited to the configuration described in the mode of embodiment, and various modifications, additions, and eliminations are possible.

A variety of configurations of tool holding mechanisms can be used as the tool holding mechanism that holds the non-rotating tool in the non-rotating tool holder.

Various methods can be used as the method that detachably attaches the body part of the non-rotating tool holder to the machine tool.

Various methods can be used as the method that conducts the cooling medium supplied from the machine tool through the first body part passage.

A variety of configurations of known pumps, which have a rotary part, an inlet part, and an outlet part, can be used as the pump.

Various methods can be used as the method that disposes the rotary member in a rotatable manner within the body part interior space.

Various methods can be used as the method that connects the rotary member and the rotary part of the pump.

The shapes and configurations of the body member, sleeve, cap, and rotary member are not limited to the shapes and configurations described in the mode of embodiment, and can be modified in various ways.

A variety of configurations of nozzles can be used as the nozzle.

In the mode of embodiment, the body part is constituted by a body member, a sleeve, and a cap, but it is not limited to this. For example, the body part can also be constituted as a single member, in which a body member, a sleeve, and a cap are integrated. Further, the body part can be constituted by a member, in which a body member and a sleeve are integrated, and a cap, or alternatively, the body part can be constituted by a member, in which a sleeve and a cap are integrated, and a body member.

The configurations described in modes of embodiment can be used alone or an appropriately selected plurality thereof can be used in combinations.

### Explanation of the Reference Numerals

10: turret, 11a to 11c: tool holder attachment surface (tool holder attachment part), 20: drive mechanism, 100: tool holder (non-rotating tool holder), 110: body member, 111: body member inner peripheral surface, 111a to 111c: body member inner peripheral surface portion, 112: body member outer peripheral surface, 112a: body member outer peripheral surface portion (attaching part), 113: body member interior space, 114: first body member passage, 115: second body member passage, 116a to 116c: O-ring (sealing member), 120: sleeve, 120A: sleeve front end surface, 120B: sleeve rear end surface, 121: sleeve inner peripheral surface, 121a to 121c: sleeve inner peripheral surface portion, 122: sleeve outer peripheral surface, 122a to 122c: sleeve outer peripheral surface portion, 123: sleeve interior space, 124: first sleeve passage, 125: second sleeve passage, 126a: O-ring (sealing member), 130: rotary member, 133: bearing, 140: anti-rotation pin, 150: cap, 150A: cap front end surface, 150B: cap rear end surface, 152: cap outer peripheral surface, 152a to 152c: cap outer peripheral surface portion, 160: nozzle, 161: spray hole, 161a: opening, 170: tool (non-rotating tool), 171: cutting edge, 200: pump, 201: inlet part, 202: outlet part, 300, 400: tool holder (rotary tool holder), 312a, 412a: attaching surface, 330, 430: rotary shaft, 370, 470: tool (rotary tool), W: workpiece

## Claims

1. A tool holder that holds a tool for processing a workpiece, comprising
a body part (110, 120, 150), a rotary member (130), and a pump (200), wherein:
the body part (110, 120, 150) has a body part inner peripheral surface (111, 121), a body part interior space (113, 123) formed by the body part inner peripheral surface (111, 121), and body part passages (114, 115a, 124, 125);
the body part (110, 120, 150) has an attaching part (112a) that can be detachably attached to a tool holder attachment part (11a) of a machine tool;
the rotary member (130) is rotatably disposed within the body part interior space (113, 123) of the body part (110, 120, 150);
the pump (200) has a rotary part, an inlet part (201), and an outlet part (202), and is configured so that the rotary part is disposed in the body part interior space (113, 123) of the body part (110, 120, 150) so as to be rotatable in conjunction with rotation of the rotary member (130), and the pump (200) is configured to increase the pressure of cooling medium suctioned from the inlet part (201) and to discharge the cooling medium, the pressure of which has been increased, from the outlet part (202);
**characterized in that**
the tool holder holds the tool in a non-rotatable manner;
the body part passages comprise a first body part passage (111, 124) and a second body part passage (115, 125);
the inlet part (201) communicates with the first body part passage (114, 124) of the body part (110, 120, 150) and the outlet part (202) communicates with the second body part passage (115, 125) of the body part (110, 120, 150);
the tool holder further comprises a nozzle (160), wherein the nozzle (160) has a spray hole (161) that sprays the cooling medium, and is attached to the body part (110, 120, 150) so that the spray hole (161) communicates with the second body part passage (115, 125) of the body part (110, 120, 150); and
it is configured such that, in a state in which the attaching part (112a) has been attached to the tool holder attachment part (11a), cooling medium supplied from the machine tool is conducted through the first body part passage (114, 124), and the rotary member (130) is rotationally driven by a drive mechanism (20) provided in the machine tool.

2. The tool holder according to claim 1, wherein:
the body part has a body member (110), a sleeve (120), and a cap (150);
the body member (110) is formed in a cylindrical shape, and has an attaching part (112a), a body member inner peripheral surface (111), a body member interior space (113) formed by the body member inner peripheral surface (111), a first body member passage (114) that opens at the body member inner peripheral surface (111), and a second body member passage (115) that opens at the body member inner peripheral surface (111);
the sleeve (120) is formed in a cylindrical shape and has a sleeve inner peripheral surface (121), a sleeve outer peripheral surface (122), a sleeve interior space (123) formed by the sleeve inner peripheral surface (121), a first sleeve passage (124) that opens at the sleeve outer peripheral surface (122) and the sleeve inner peripheral surface (121), and a second sleeve passage (125) that opens at the sleeve inner peripheral surface (121) and at the sleeve outer peripheral surface (122);
the sleeve (120) is disposed in the body member interior space (113) so that the first sleeve passage (124) communicates with the first body member passage (114) and the second sleeve passage (125) communicates with the second body member passage (115);
the cap (150) is provided on the sleeve (120) so as to close the front end side of the sleeve interior space (123);
the rotary member (130) is rotatably disposed in the body member interior space (113);
the pump (200) is configured so that the rotary part is disposed between the rotary member (130) and the cap (150), the inlet part (201) communicates with the first sleeve passage (124), and the outlet part (202) communicates with the second sleeve passage (125);
the nozzle (160) is attached to the body member (110) so that the spray hole (161) communicates with the second body member passage (115); and
it is configured such that, in the state in which the attaching part (112a) has been attached to the tool holder attachment part (11a), the cooling medium supplied from the machine tool is conducted through the first body member passage (114).

3. A turret (10), which is rotatable around a turret centerline (O), and is provided with a plurality of tool holder attachment parts (11a to 11c) in the circumferential direction on the outer peripheral side, to which attaching parts (112a; 312a; 412a) of tool holders (100; 300; 400) are detachably attachable, comprising:
a turret drive mechanism that rotates the turret (10) so that one of the plurality of tool holder attachment parts (11a to 11c) is disposed at a predetermined processing position;
a cooling medium supply mechanism that supplies a cooling medium to a tool holder (100) attached to a tool holder attachment part (11a) disposed at the processing position; and
a drive mechanism (20) that rotationally drives a rotary part of the tool holder (100; 300; 400) attached to the tool holder attachment part (11a to 11c) disposed at the processing position,
wherein the tool holder (100) according to claim 1 or 2 is attached to at least one (11a) of the plurality of tool holder attachment parts (11a to 11c).

## Patentansprüche

1. Werkzeughalter, der ein Werkzeug zum Bearbeiten eines Werkstückes hält, mit
einem Körperteil (110, 120, 150), einem Drehbauteil (130) und einer Pumpe (200), bei dem
der Körperteil (110, 120, 150) eine Körperteilinnenumfangsoberfläche (111, 121), einen Körperteilinnenraum (113, 123), der durch die Körperteilinnenumfangsoberfläche (111, 121) ausgebildet ist, und Körperteilpassagen (114, 115a, 124, 125) aufweist,
der Körperteil (110, 120, 150) einen Anbringungsteil (112a) aufweist, der entfernbar an einen Werkzeughalteranbringungsteil (11a) eines Maschinenwerkzeuges angebracht werden kann,
das Drehbauteil (130) innerhalb des Körperteilinnenraums (113, 123) des Körperteils (110, 120, 150) drehbar angeordnet ist,
die Pumpe (200) einen Drehteil, einen Einlassteil (201) und einen Auslassteil (202) aufweist und derart konfiguriert ist, dass der Drehteil in dem Körperteilinnenraum (113, 123) des Körperteils (110, 120, 150) derart angeordnet ist, dass er in Verbindung mit einer Drehung des Drehbauteils (130) drehbar ist, und die Pumpe (200) dazu konfiguriert ist, den Druck eines Kühlmittels, das von dem Einlassteil (201) angesaugt wird, zu erhöhen, und das Kühlmittel, dessen Druck erhöht wurde, von dem Auslassteil (202) abzuleiten,
**dadurch gekennzeichnet, dass**
der Werkzeughalter das Werkzeug in einer nicht drehbaren Weise hält,
die Körperteilpassagen eine erste Körperteilpassage (114, 124) und eine zweite Körperteilpassage (115, 125) aufweisen,
der Einlassteil (201) mit der ersten Körperteilpassage (114, 124) des Körperteils (110, 120, 150) kommunizierend in Verbindung steht, und der Auslassteil (202) mit der zweiten Körperteilpassage (115, 125) des Körperteils (110, 120, 150) kommunizierend in Verbindung steht,
der Werkzeughalter ferner eine Düse (160) aufweist, bei dem die Düse (160) ein Sprühloch (161) aufweist, das das Kühlmittel versprüht, und an dem Körperteil (110, 120, 150) derart angebracht ist, dass das Sprühloch (161) mit der zweiten Körperteilpassage (115, 125) des Körperteils (110, 120, 150) kommunizierend in Verbindung steht, und
es derart konfiguriert ist, dass in einem Zustand, in welchem der Anbringungsteil (112a) an dem Werkzeughalteranbringungsteil (11a) angebracht wurde, das Kühlmittel, das von dem Maschinenwerkzeug zugeführt wird, durch die erste Körperteilpassage (114, 124) geleitet wird, und das Drehbauteil (130) drehend durch einen Antriebsmechanismus (20), der bei dem Maschinenwerkzeug vorgesehen ist, angetrieben wird.

2. Werkzeughalter nach Anspruch 1, bei dem
der Körperteil ein Körperbauteil (110), eine Hülse (120) und eine Kappe (150) aufweist,
das Körperbauteil (110) in einer zylindrischen Form ausgebildet ist und einen Anbringungsteil (112a), eine Körperbauteilinnenumfangsoberfläche (111), einen Körperbauteilinnenraum (113), der durch die Körperbauteilinnenumfangsoberfläche (111) ausgebildet ist, eine erste Körperbauteilpassage (114), die an der Körperbauteilinnenumfangsoberfläche (111) offen ist, und eine zweite Körperbauteilpassage (115) aufweist, die an der Körperbauteilinnenumfangsoberfläche (111) offen ist,
die Hülse (120) in einer zylindrischen Form ausgebildet ist und eine Hülseninnenumfangsoberfläche (121), eine Hülsenaußenumfangsoberfläche (122), einen Hülseninnenraum (123), der durch die Hülseninnenumfangsoberfläche (121) ausgebildet ist, eine erste Hülsenpassage (124), die an der Hülsenaußenumfangsoberfläche (122) und der Hülseninnenumfangsoberfläche (121) offen ist, und eine zweite Hülsenpassage (125) aufweist, die an der Hülseninnenumfangsoberfläche (121) und an der Hülsenaußenumfangsoberfläche (122) offen ist,
die Hülse (120) in dem Körperbauteilinnenraum (113) derart angeordnet ist, dass die erste Hülsenpassage (124) mit der ersten Körperbauteilpassage (114) kommunizierend in Verbindung steht und die zweite Hülsenpassage (125) mit der zweiten Körperbauteilpassage (115) kommunizierend in Verbindung steht,
die Kappe (150) an der Hülse (120) derart vorgesehen ist, dass sie die vordere Endseite des Hülseninnenraums (123) schließt,
das Drehbauteil (130) drehbar in dem Körperbauteilinnenraum (113) angeordnet ist,
die Pumpe (200) derart konfiguriert ist, dass der Drehteil zwischen dem Drehbauteil (130) und der Kappe (150) angeordnet ist, der Einlassteil (201) mit der ersten Hülsenpassage (124) kommunizierend in Verbindung steht, und der Auslassteil (202) kommunizierend mit der zweiten Hülsenpassage (125) in Verbindung steht,
die Düse (160) an dem Körperbauteil (110) derart angebracht ist, dass das Sprühloch (161) mit der zweiten Körperbauteilpassage (115) kommunizierend in Verbindung steht, und
es derart konfiguriert ist, dass in dem Zustand, in welchem der Anbringungsteil (112a) an dem Werkzeughalteranbringungsteil (11a) angebracht wurde, das Kühlmittel, das von dem Maschinenwerkzeug zugeführt wird, durch die erste Körperbauteilpassage (114) geleitet wird.

3. Werkzeugrevolver (10), welcher um eine Werkzeugrevolvermittellinie (O) drehbar ist, und mit einer Mehrzahl von Werkzeughalteranbringungsteilen (11a bis 11c) in der Umfangsrichtung an der Außenumfangsseite vorgesehen ist, an welche Anbringungsteile (112a; 312a; 412a) von Werkzeughaltern (100; 300; 400) entfernbar anbringbar sind, mit
einem Werkzeugrevolverantriebsmechanismus, der den Werkzeugrevolver (10) derart dreht, dass einer der Mehrzahl von Werkzeughalteranbringungsteilen (11a bis 11c) an einer vorbestimmten Bearbeitungsposition angeordnet ist,
einem Kühlmittelzufuhrmechanismus, der ein Kühlmittel an einen Werkzeughalter (100) zuführt, der an einem Werkzeughalteranbringungsteil (11a) angebracht ist, der in der Bearbeitungsposition angeordnet ist, und
einem Antriebsmechanismus (20), der drehend einen Drehteil des Werkzeughalters (100; 300; 400) antreibt, der in den Werkzeughalteranbringungsteil (11a bis 11c) angebracht ist, der in der Bearbeitungsposition angeordnet ist,
bei dem der Werkzeughalter (100) nach Anspruch 1 oder 2 an zumindest einen (11a) von der Mehrzahl von Werkzeughalteranbringungsteilen (11a bis 11c) angebracht ist.

## Revendications

1. Porte-outil destiné à maintenir un outil pour le traitement d'une pièce à usiner, comprenant
une partie de corps (110, 120, 150), un élément rotatif (130) et une pompe (200), dans lequel :
la partie de corps (110, 120, 150) a une surface périphérique intérieure de partie de corps (111, 121), un espace intérieur de partie de corps (113, 123) formé par la surface périphérique intérieure de partie de corps (111, 121), et des passages de partie de corps (114, 115a, 124, 125) ;
la partie de corps (110, 120, 150) a une partie de fixation (112a) qui peut être fixée de manière amovible à une partie de fixation de porte-outil (11a) d'une machine-outil ;
l'élément rotatif (130) est disposé de manière rotative dans l'espace intérieur de partie de corps (113, 123) de la partie de corps (110, 120, 150) ;
la pompe (200) a une partie rotative, une partie d'entrée (201), et une partie de sortie (202), et est configurée de telle sorte que la partie rotative est disposée dans l'espace intérieur de partie de corps (113, 123) de la partie de corps (110, 120, 150) de manière à être rotative en conjonction avec la rotation de l'élément rotatif (130), et la pompe (200) est configurée pour augmenter la pression du milieu de refroidissement aspiré à partir de la partie d'entrée (201) et pour évacuer le milieu de refroidissement, dont la pression a été augmentée, à partir de la partie de sortie (202) ;
**caractérisé en ce que**
le porte-outil maintient l'outil de manière non rotative ;
les passages de partie de corps comprennent un premier passage de partie de corps (111, 124) et un deuxième passage de partie de corps (115, 125) ;
la partie d'entrée (201) communique avec le premier passage de partie de corps (114, 124) de la partie de corps (110, 120, 150) et la partie de sortie (202) communique avec le deuxième passage de partie de corps (115, 125) de la partie de corps (110, 120, 150) ;
le porte-outil comprend en outre une buse (160), dans lequel la buse (160) a un trou de pulvérisation (161) qui pulvérise le milieu de refroidissement, et est fixée à la partie de corps (110, 120, 150) de sorte que le trou de pulvérisation (161) communique avec le deuxième passage de partie de corps (115, 125) de la partie de corps (110, 120, 150) ; et
il est configuré de telle sorte que, dans un état dans lequel la partie de fixation (112a) a été fixée à la partie de fixation de porte-outil (11a), le milieu de refroidissement fourni par la machine-outil est acheminé à travers le premier passage de partie de corps (114, 124), et l'élément rotatif (130) est entraîné en rotation par un mécanisme d'entraînement (20) prévu dans la machine-outil.

2. Porte-outil selon la revendication 1, dans lequel :
la partie de corps a un élément de corps (110), un manchon (120) et un capuchon (150) ; l'élément de corps (110) est de forme cylindrique et a une partie de fixation (112a), une surface périphérique intérieure d'élément de corps (111), un espace intérieur d'élément de corps (113) formé par la surface périphérique intérieure d'élément de corps (111), un premier passage d'élément de corps (114) qui s'ouvre sur la surface périphérique intérieure d'élément de corps (111), et un deuxième passage d'élément de corps (115) qui s'ouvre sur la surface périphérique intérieure d'élément de corps (111) ;
le manchon (120) est de forme cylindrique et a une surface périphérique intérieure de manchon (121), une surface périphérique extérieure de manchon (122), un espace intérieur de manchon (123) formé par la surface périphérique intérieure de manchon (121), un premier passage de manchon (124) qui s'ouvre au niveau de la surface périphérique extérieure de manchon (122) et de la surface périphérique intérieure de manchon (121), et un deuxième passage de manchon (125) qui s'ouvre au niveau de la surface périphérique intérieure de manchon (121) et de la surface périphérique extérieure de manchon (122) ;
le manchon (120) est disposé dans l'espace intérieur d'élément de corps (113) de sorte que le premier passage de manchon (124) communique avec le premier passage d'élément de corps (114) et que le deuxième passage de manchon (125) communique avec le deuxième passage d'élément de corps (115) ;
le capuchon (150) est placé sur le manchon (120) de manière à fermer l'extrémité avant de l'espace intérieur de manchon (123) ;
l'élément rotatif (130) est disposé de manière rotative dans l'espace intérieur d'élément de corps (113) ;
la pompe (200) est configurée de telle sorte que la partie rotative est disposée entre l'élément rotatif (130) et le capuchon (150), la partie d'entrée (201) communique avec le premier passage de manchon (124), et la partie de sortie (202) communique avec le deuxième passage de manchon (125) ;
la buse (160) est fixée à l'élément de corps (110) de sorte que le trou de pulvérisation (161) communique avec le deuxième passage d'élément de corps (115) ; et
elle est configurée de telle sorte que, dans l'état où la partie de fixation (112a) a été fixée à la partie de fixation de porte-outil (11a), le milieu de refroidissement fourni par la machine-outil est acheminé à travers le premier passage d'élément de corps (114).

3. Tourelle (10), rotative autour d'un axe central de tourelle (O) et dotée d'une pluralité de parties de fixation de porte-outil (11a à 11c) dans la direction circonférentielle sur le côté périphérique extérieur, auxquelles des parties de fixation (112a ; 312a ; 412a) de porte-outils (100 ; 300 ; 400) peuvent être attachées de manière amovible, comprenant :
un mécanisme d'entraînement de tourelle qui fait tourner la tourelle (10) de manière à ce que l'une de la pluralité de parties de fixation de porte-outil (11a to 11c) soit disposée à une position de traitement prédéterminée ;
un mécanisme de fourniture de milieu de refroidissement qui fournit un milieu de refroidissement à un porte-outil (100) fixé à une partie de fixation de porte-outil (11a) disposée à la position de traitement ; et
un mécanisme d'entraînement (20) qui entraîne en rotation une partie rotative du porte-outil (100 ; 300 ; 400) fixé à la partie de fixation de porte-outil (11a à 11c) disposée à la position de traitement,
dans lequel le porte-outil (100) selon la revendication 1 ou 2 est fixé à au moins une (11a) de la pluralité de parties de fixation de porte-outil (11a à 11c).
